# EUROPÄISCHE PATENTANMELDUNG

(11) **EP 2 384 919 A1**
(43) Veröffentlichungstag der Anmeldung: **09.11.2011**
(21) Anmeldenummer: 11401070.5
(22) Anmeldetag: 29.04.2011
(51) Int. Cl.: B60K 5/12, A01B 51/02, A01D 34/00

(54) **Selbstfahrendes Fahrzeug**

(30) Priorität: 04.05.2010 DE 102010016763
(71) Anmelder: Amazonen-Werke H. Dreyer GmbH & Co. KG, 49205 Hasbergen (DE)
(72) Erfinder: Bahl, Benoit, 57620, Goetzenbruck (FR)

(57) **Zusammenfassung**

Selbstfahrendes Fahrzeug und/oder Gerät, insbesondere Mähgerät, mit einem sich auf Räder eines Fahrwerkes abstützenden Fahrzeug- und/oder Geräterahmen (1), einen am Rahmen (1) über Dämpfungselemente (16) angeordneten Antriebsmotor (9), zumindest einem am Rahmen (1) angeordneten und von dem Antriebsmotor (9) über mechanische Antriebsvorrichtungen angetriebenen Arbeitswerkzeug (4), wobei die Antriebsvorrichtungen zumindest eine über Riementriebe (14) angetriebene und drehbar gelagerte Vorgelegewelle (11) aufweist. Um bei einem kompakt bauenden Fahrzeug, welches beengte Einbauräume für die Antriebselemente aufweisen, eine einfache, schnelle und unkomplizierte Montage und Demontage der Antriebseinheit sowie deren Wartung zu ermöglichen, ist vorgesehen, dass an dem Antriebsmotor (9) zumindest ein Montagerahmen (10) angeordnet ist, dass an diesem Montagerahmen (10) die Vorgelegewelle (11) der Antriebsvorrichtung (13) des Arbeitswerkzeuges (4), die Antriebsvorrichtung (13) der Räder (2) des Fahrwerkes und zumindest ein Riemenspanner (15) zumindest eines Riementriebes (14) der Antriebsvorrichtungen angeordnet ist, dass der Antriebsmotor (9) über den Montagerahmen (10) auf den Dämpfungselementen (16) am Fahrzeug- und/oder Geräterahmen (1) befestigt ist.

## Beschreibung

Die Erfindung betrifft ein selbstfahrendes Fahrzeug und/oder Gerät gemäß des Oberbegriffes des Patentanspruches 1.

Derartige selbstfahrende Fahrzeuge und/oder Geräte sind bekannt. Diese sind als Mähgerät ausgebildet und weisen einen sich auf Räder eines Fahrwerkes abstützenden Fahrzeug- und/oder Geräterahmen auf. An diesem Rahmen ist der Antriebsmotor über Dämpfungselemente angeordnet. Von diesem Antriebsmotor werden über mechanische Antriebsvorrichtungen Arbeitsaggregate angetrieben. Diese Antriebsvorrichtungen weisen zumindest eine über Riementriebe angetriebene und drehbar gelagerte Vorgelegewelle auf.

Der Erfindung liegt die Aufgabe zu Grunde, bei einem kompakt bauenden Fahrzeug, welches beengte Einbauräume für die Antriebselemente aufweisen, eine einfache, schnelle und unkomplizierte Montage und Demontage der Antriebseinheit sowie deren Wartung zu ermöglichen.

Diese Aufgabe wird erfindungsgemäß dadurch gelöst, dass an dem Antriebsmotor zumindest ein Montagerahmen angeordnet ist, dass an diesem Montagerahmen zumindest die Vorgelegewelle der Antriebsvorrichtung des Arbeitswerkzeuges, zumindest einige Elemente für die Antriebsvorrichtung der Räder des Fahrwerkes und zumindest ein Riemenspanner zumindest eines Riementriebes der Antriebsvorrichtungen angeordnet ist, dass der Antriebsmotor über den Montagerahmen auf die Dämpfungselemente am Fahrzeug- und/oder Geräterahmen befestigt ist. Infolge dieser Maßnahmen wird die mit dem Antriebsmotor auf den Dämpfungselementen gelagerte Montageeinheit gegen über der bisher ausschließlich für den Antriebsmotor vorgesehenen Dämpfungselemente schwerer gemacht und somit wird die gesamte Einheit ruhiger angeordnet, so dass sie weniger zum schwingen geneigt. Durch diesen Aufbau für die Fahr- und Antriebselemente und deren Lagerung auf den Dämpfungselementen wird somit eine gedämpfte Anordnung erreicht. Somit können die von diesen auf den Dämpfungselemente angeordneten drehenden Teile nur in geringem Maße Schwingungen erzeugen und auf den Fahrzeug- und/oder Geräterahmen übertragen werden.

Vorteilhaft hat sich gezeigt, dass drei Dämpfungselemente vorgesehen sind.

Eine besonders kompakt ausgestaltete Montageeinheit lässt sich dadurch erreichen, dass der Antriebsmotor, der Montagerahmen, die Vorgelegewelle der Antriebsvorrichtung des Arbeitswerkzeuges, zumindest die Grundelemente für die Antriebsvorrichtung der Räder des Fahrwerkes und der Riemenspanner der Antriebsvorrichtungen eine am Rahmen zu befestigende und demontierbare Montageeinheit bilden.

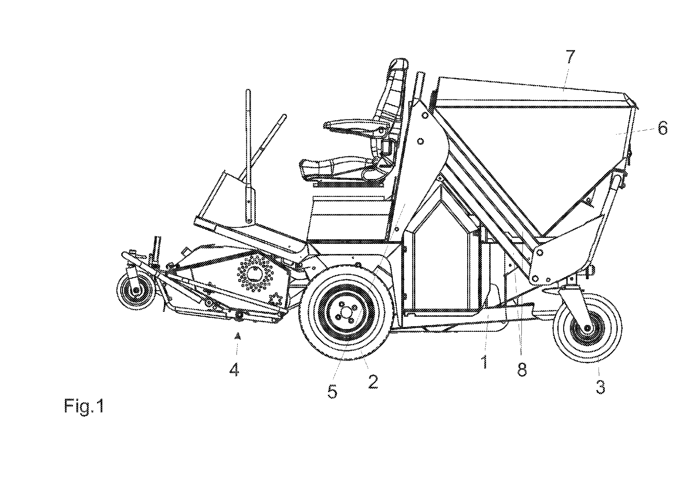

Weitere Einzelheiten der Erfindung sind der Beispielsbeschreibung und den Zeichnungen zu entnehmen. Hierbei zeigen
- Fig. 1: das selbstfahrende Fahrzeug und/oder Gerät in Seitenansicht,
- Fig. 2: die Anordnung der Antriebsvorrichtung an dem Rahmen des Fahrzeuges und/oder Gerätes in Seitenansicht und vergrößerten Maßstab,

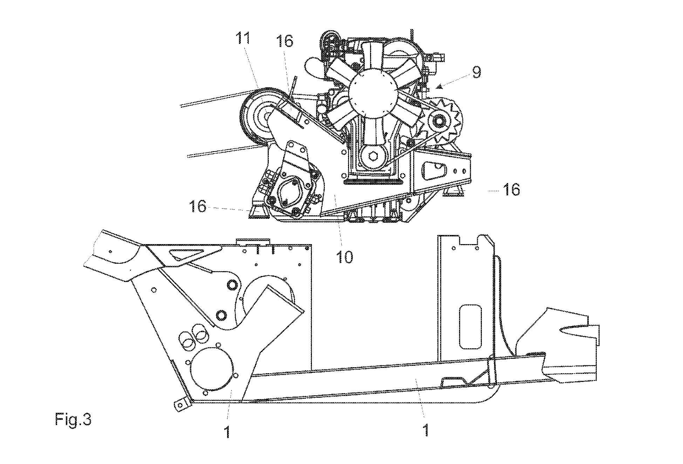

- Fig. 3: die Anordnung der Antriebsvorrichtung an dem Rahmen des Fahrzeuges und/oder Gerätes in Seitenansicht, in Explosionsdarstellung und vergrößerten Maßstab,

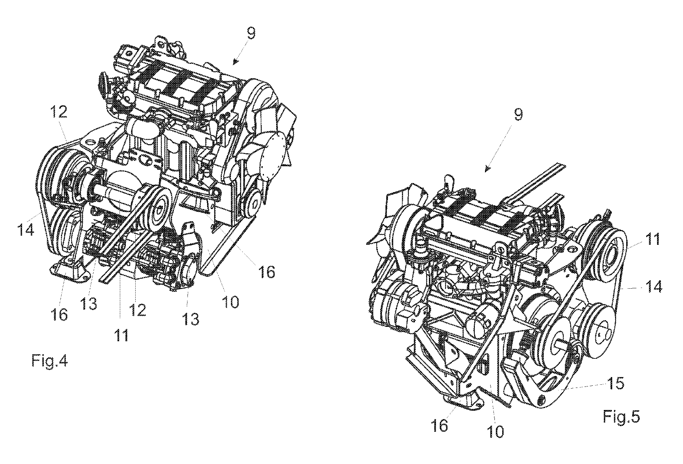

- Fig. 4: die Antriebsvorrichtung in perspektivischer Darstellung und
- Fig. 5: die Antriebsvorrichtung in anderer perspektivischer Darstellung.

Das selbstfahrende Fahrzeug und/oder Gerät ist als selbst Mäh-, Vertikutier-, Sammel- und/oder Kehrgerät ausgebildet. Sie weist den Rahmen 1 auf, der sich über die Antriebsräder 2 und die Laufräder 3 auf dem Boden abstützt. Im vorderen Bereich ist das als Aufnahmevorrichtung 4 ausgebildete Arbeitswerkzeug an dem das Gehäuse 5 aufweisenden Rahmen 1 angeordnet. Die Aufnahmevorrichtung 4 nimmt das aufzusammelnde Gut auf und fördert es über eine nicht dargestellte angetriebene Transportvorrichtung in den sich an dem Gehäuse 5 anschließenden Sammelbehälter 6. Der Sammelbehälter 6 weist auf seiner Oberseite eine Entleerungsöffnung auf, die durch einen als Klappe ausgebildete Deckel 7 abgedeckt ist. Der Deckel 7 ist mittels Gelenken, die eine quer zur Fahrtrichtung verlaufende Schwenkachse aufweisen, an den Wänden des Sammelbehälters 6 im vorderen oberen Bereich aufschwenkbar angelenkt. Der Sammelbehälter 6 ist mittels einer Schwenk- und Hebevorrichtung 8 am Rahmen 1 der Sammelmaschine befestigt. Zum Entleeren des Sammelbehälters 6 kann dieser mittels der Schwenk- und Hebevorrichtung 8, der motorische Betätigungsmittel zugeordnet sind, angehoben und nach hinten verschwenkt werden. Die Verschwenkung erfolgt in der Art, dass die Entleerungsöffnung zumindest teilweise nach unten weist.

Zum Antrieb der selbstfahrenden Fahrzeuges und/oder Gerätes ist ein am Rahmen 1 gefestigter Antriebsmotor 9 vorhanden. Zur Anordnung des Antriebsmotors 9 am Rahmen 1 ist ein Montagerahmen 10 vorgesehen. Dieser Montagerahmen 10 ist an dem Antriebsmotor 9 angeordnet. An dem Montagerahmen 10 ist in die Vorgelegewelle 11 für die Antriebsvorrichtung der Arbeitswerkzeuge 4 mit einer Lagerung 12 drehbar gelagert. Weiterhin sind an dem Montagerahmen 10 Antriebselemente 13 für die Antriebsvorrichtung der Räder 2 des Fahrwerkes angeordnet. Die Antriebselemente 13 für die Räder 2 des Fahrwerkes sind als Hydraulikpumpen ausgebildet und werde von einem Riementrieb 14 von der Antriebswelle des Antriebsmotors 9 angetrieben. Dieser Riementrieb 14 treibt auch gleichzeitig die Vorgelegewelle 12 für die Werkzeuge 4 an. Des weiteren ist an dem Montagerahmen 10 ein Riemenspanner 15 zur Spannung des Riementriebes 14 für die Vorgelegewelle 11 angeordnet.

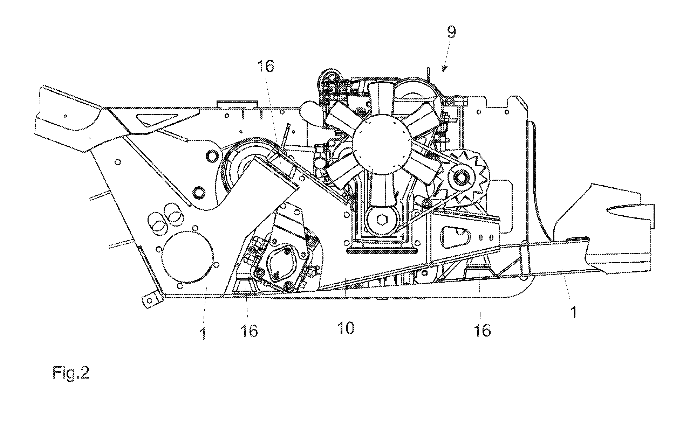

Der Antriebsmotor 4 mit den über den Montagerahmen 10 daran angeordneten Elementen 11, 12, 13, 14, 15 der Antriebsvorrichtung wird über drei Dämpfungselemente 16 am Fahrzeug- und/oder Geräterahmen 1 befestigt, wie in Fig. 2 dargestellt ist. Es sind insgesamt im Ausführungsbeispiel drei Dämpfungselemente 16 vorgesehen.

Über den Montagerahmen 10 ist der Antriebsmotor 9, mit der Vorgelegewelle 11 der Antriebsvorrichtung für die Werkzeuge 4, die Antriebsvorrichtung 13 der Räder 2 des Fahrwerkes und der Riemenspanner 15 für die Antriebsvorrichtung mittels der Dämpfungselemente 16 am Rahmen 1 zu befestigen und zu demontieren. Somit bilden die vorbeschriebene Elemente, die an dem Montagerahmen 10 befestigt sind, eine am Rahmen 1 zu befestigende und demontierbare Montageeinheit.

Dadurch, dass über den Montagerahmen 10 eine wesentlich größere Masse als der Antriebsmotor 9 selbst aufweist und über die Dämpfungselemente 16 als Montageeinheit am Rahmen 1 angeordnet ist und somit der Antriebsmotor schwerer gemacht worden ist, ergibt sich ein verbessertes Schwingungsverhalten der an der Montageeinheit 10 befestigten und dem Antriebsmotor 9 zugeordneten Elementen. Somit wird das Schwingungsverhalten des Gerätes wesentlich verbessert.

## Patentansprüche

1. Selbstfahrendes Fahrzeug und/oder Gerät, insbesondere Mähgerät, mit einem sich auf Räder eines Fahrwerkes abstützenden Fahrzeug- und/oder Geräterahmen, einen am Rahmen über Dämpfungselemente angeordneten Antriebsmotor, zumindest einem am Rahmen angeordneten und von dem Antriebsmotor über mechanische Antriebsvorrichtungen angetriebenen Arbeitswerkzeug, wobei die Antriebsvorrichtungen zumindest eine über Riementriebe angetriebene und drehbar gelagerte Vorgelegewelle aufweist, **dadurch gekennzeichnet, dass** an dem Antriebsmotor zumindest ein Montagerahmen angeordnet ist, dass an diesem Montagerahmen (10) die Vorgelegewelle (11) der Antriebsvorrichtung des Arbeitswerkzeuges (4), die Antriebsvorrichtung (13) der Räder (2) des Fahrwerkes und zumindest ein Riemenspanner (15) zumindest eines Riementriebes (14) der Antriebsvorrichtungen angeordnet ist, dass der Antriebsmotor (9) über den Montagerahmen (10) auf die Dämpfungselemente (16) am Fahrzeug- und/oder Geräterahmen (1) befestigt ist.

2. Selbstfahrende Fahrzeug nach Anspruch 1, **dadurch gekennzeichnet, dass** drei Dämpfungselemente (16) vorgesehen sind.

3. Selbstfahrendes Fahrzeug nach Anspruch 1, **dadurch gekennzeichnet, dass** der Antriebsmotor (9), der Montagerahmen (10), die Vorgelegewelle (11) der Antriebsvorrichtung des Arbeitswerkzeuges, die Antriebsvorrichtung (13) der Räder (2) des Fahrwerkes und der Riemenspanner (15) der Antriebsvorrichtungen eine am Rahmen (1) zu befestigende und demontierbare Montageeinheit bilden.
